# EUROPÄISCHE PATENTANMELDUNG

(11) **EP 1 063 124 A2**
(43) Veröffentlichungstag der Anmeldung: **27.12.2000**
(21) Anmeldenummer: 00112109.4
(22) Anmeldetag: 06.06.2000
(51) Int. Cl.: B60Q 3/04

(54) **Signalleuchte**

(30) Priorität: 26.06.1999 DE 19929470
(71) Anmelder: Mannesmann VDO Aktiengesellschaft, 60388 Frankfurt am Main (DE)
(72) Erfinder: Adams, Jürgen, Dipl.-Ing., 78052 Villingen-Schwenningen (DE)

(57) **Zusammenfassung**

Ausgehend von einer Signalleuchte, die aus einer Leuchtkammer (1), einer die Leuchtkammer (1) zum Betrachter der Signalleuchte hin abschließenden Streuscheibe (2) und einer in der Leuchtkammer (1) angeordneten, die Streuscheibe (2) hinterleuchtenden Leuchtdiode (3) besteht, wird zur Verbesserung der Signalwirkung der Signalleuchte vorgeschlagen, in der Leuchtkammer (1) einen Lichtleiter (4) vorzusehen, der zumindest einen Teil des von der Leuchtdiode (3) erzeugten Lichtstromes aufnimmt, bündelt und zur Streuscheibe (2) leitet und diesen Lichtstrom als einen im Verhältnis zur Fläche der Streuscheibe (2) kleinen Lichtfleck (5) durch die Streuscheibe (2) hindurchtreten läßt.

## Beschreibung

Die Erfindung betrifft eine Signalleuchte, bestehend aus einer Leuchtkammer, einer die Leuchtkammer zum Betrachter der Signalleuchte hin abschließenden Streuscheibe und einer in der Leuchtkammer angeordneten, die Streuscheibe hinterleuchtenden Leuchtdiode. Derartige Signalleuchten werden beispielsweise als Kontrolleuchten eingesetzt, und zwar zur Anzeige von Statusinformationen von in einem Fahrzeug angeordneten Einrichtungen, wobei die Kontrolleuchten vorzugsweise in einem Kombiinstrument von Personenkraftwagen und Nutzfahrzeugen sowie Bussen angeordnet sind.

Gerade bei der genannten Anwendung im Kombiinstrument werden heutzutage zunehmend Leuchtdioden eingesetzt, einerseits aus Kostengründen, aber auch, weil der Einsatz von Leuchtdioden die Gestaltungsfreiheit bei Kombiinstrumenten vergrößert. So ergeben sich verbesserte gestalterische Möglichkeiten daraus, daß Leuchtdioden im Vergleich zu herkömmlichen Glühlampen weniger Bauraum in Anspruch nehmen und vor allem den Vorteil haben, daß sie nicht wie Glühlampen nach einer gewissen Gebrauchsdauer ausgewechselt werden müssen. Glühlampen müssen im Kombiinstrument zum Zweck ihrer Erneuerung notwendigerweise zugänglich sein, was aber bei Leuchtdioden nicht erforderlich ist.

Nun haben Leuchtdioden gegenüber Glühlampen aber auch einen Nachteil, denn Leuchtdioden erzeugen im Vergleich zu den bislang üblichen Glühlampen eine geringere Helligkeit. Deshalb ist die Signalwirkung einer Kontrolleuchte, deren optisches Signal mit einer Leuchtdiode erzeugt wird, unter bestimmten Umgebungsbedingungen nicht zufriedenstellend. Wenn zum Beispiel am Tage der natürliche Lichteinfall auf das Kombiinstrument des Fahrzeugs relativ groß ist, mag sich die von einer Leuchtdiode ausgeleuchtete Streuscheibe der Kontrolleuchte nur unzureichend von ihrer Umgebungshelligkeit abheben, wodurch die Signalwirkung der Kontrolleuchte für den Fahrer erheblich einbüßt, was dazu führen kann, daß das von der Kontrolleuchte ausgehende Signal vom Fahrer erst zu spät oder schlimmstenfalls überhaupt nicht wahrgenommen wird.

Da es aus Kostengründen nicht angebracht erscheint, die Anzahl der je Kontrolleuchte vorgesehenen Leuchtdioden zu vergrößern, besteht die Aufgabe der vorliegenden Erfindung darin, eine Signalleuchte aufzuzeigen, deren Signalwirkung gegenüber herkömmlichen mit einer Leuchtdiode betriebenen Signalleuchten verbessert ist.

Die Aufgabe wird durch eine Signalleuchte mit den Merkmalen des ersten Anspruchs gelöst. Die abhängigen Ansprüche zeigen vorteilhafte Weiterbildungen und Ausgestaltungen der gefundenen Lösung.

Die Lösung zeichnet sich dadurch aus, daß bei einer gattungsgemäßen Signalleuchte in der Leuchtkammer ein Lichtleiter vorgesehen ist, der zumindest einen Teil des von der Leuchtdiode erzeugten Lichtstromes aufnimmt, bündelt und zur Streuscheibe leitet und diesen Lichtstrom als einen im Verhältnis zur Fläche der Streuscheibe kleinen Lichtfleck durch die Streuscheibe hindurchtreten läßt.

Überdies ist es vorteilhaft vorzusehen,
1.) daß dasjenige Ende des Lichtleiters, welches der Leuchtdiode zugewandt ist, die Leuchtdiode zumindest an der Austrittsstelle ihres Lichtstromes zur Aufnahme zumindest eines Teiles ihres Lichtstromes zumindest teilweise überdeckt und daß der Grad der Überdeckung dabei vorzugsweise auch noch justierbar ist,
2.a) daß der Lichtleiter durch eine Öffnung in der Streuscheibe hindurchtritt und nach seinem Durchtritt durch die Streuscheibe an der dem Betrachter der Signalleuchte zugewandten Seite der Streuscheibe in Form einer planen oder konkav oder konvex ausgeformten Querschnittsfläche endet oder
2.b) daß der Lichtleiter an der dem Betrachter der Signalleuchte abgewandten Seite der Streuscheibe endet und daß die Streuscheibe zumindest im Bereich dieses Endes des Lichtleiters transparent ausgebildet ist,
3.a) daß der Lichtleiter aus einem transparenten, farbneutral lichtleitenden Kunststoff besteht oder
3.b) daß der Lichtleiter aus einem farbigen Kunststoff besteht, wobei dessen Farbe der Farbe des von der Leuchtdiode erzeugten Lichtstromes angepaßt ist.

Anhand eines Ausführungsbeispiels soll die gefundene Lösung in Verbindung mit drei Figuren nun noch näher erläutert werden. Dabei zeigen
- **Figur 1** die Leuchtkammer einer Signalleuchte im Längsschnitt,
- **Figur 2** die Leuchtkammer einer Signalleuchte in der Draufsicht und
- **Figur 3** die Streuscheibe einer Signalleuchte in der Draufsicht.

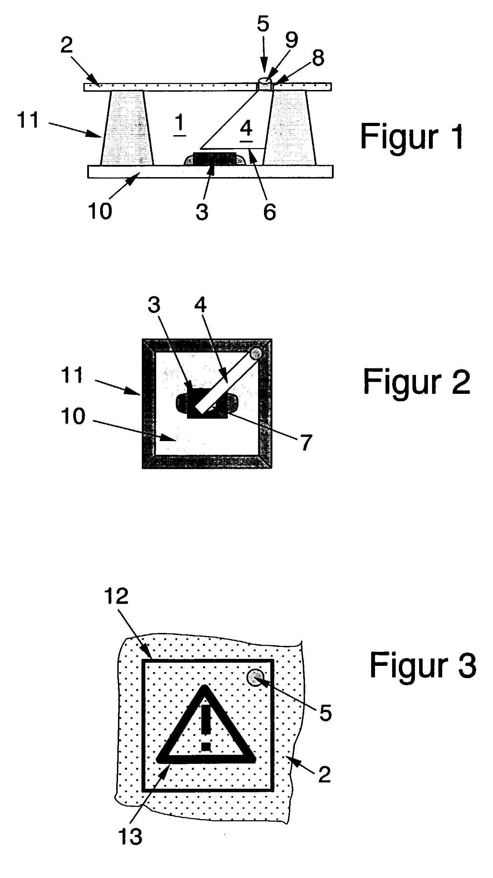

Die Figuren 1 und 2 offenbaren den prinzipiellen Aufbau einer gattungsgemäßen Signalleuchte. Man erkennt, daß die Leuchtkammer 1 der Signalleuchte ein von seitlichen Stegen 11 umgebener Raum ist, der auf derjenigen Seite, die dem Betrachter der Signalleuchte zugewandt ist, von einer Streuscheibe 2 abgedeckt wird. Der Boden der Leuchtkammer 1 wird durch eine Leiterplatte 10 gebildet, auf der eine Leuchtdiode 3 aufgebracht ist, die ihren Lichtstrom in die Leuchtkammer 1 hinein zur Streuscheibe 2 hin abstrahlt. Dabei kann die Leuchtdiode 3 beispielsweise durch ein SMD-Bauteil realisiert sein. Die Querschnittsfläche der durch die Stege 11 umgrenzten Leuchtkammer 1 kann sich zur Streuscheibe 2 hin trichterförmig weiten. Es ist vorteilhaft, die Stege 11 aus einem hellen, vorzugsweise weißen, hochreflektiven Kunststoff zu fertigen.

Die Streuscheibe 2 trägt gemäß der Figur 3 in einem in angemessener Relation zur Querschnittsfläche der Leuchtkammer 1 stehenden Feldbereich 12 ein Symbol 13, welches dem Fahrer des Fahrzeugs im Fall des Aufleuchtens der Signalleuchte eine definierte Information vermittelt. Dabei kann die Streuscheibe 2 beispielsweise aus einem diffus lichtdurchlässigen Kunststoff bestehen, auf dem das Symbol 13 aufgedruckt ist, oder aber die Streuscheibe 2 ist an sich transparent ausgebildet, wobei ihre Oberfläche jedoch bis auf die Darstellung des Symbols 13 lichtundurchlässig abgedeckt ist.

Der in die Leuchtkammer 1 von der Leuchtdiode 3 abgestrahlte Lichtstrom mag im Hinblick auf das Symbol 13 eine ausreichende Signalwirkung hervorrufen, wenn die Umgebungshelligkeit der Signalleuchte gering ist, jedoch wird die Signalwirkung durch die erfindungsgemäßen Maßnahmen insbesondere für den Fall einer hohen Umgebungshelligkeit erheblich gesteigert. So ist in der Leuchtkammer 1 ein Lichtleiter 4 vorgesehen, der einen Teil des von der Leuchtdiode 3 erzeugten Lichtstromes aufnimmt, bündelt und zur Streuscheibe 2 leitet und den derart fokussierten Lichtstrom in Zuordnung zum Symbol 13 als einen im Verhältnis zur Fläche der Streuscheibe 2 kleinen Lichtfleck 5 anzeigt.

Wie es die Figuren 1 und 2 anzeigen, kann der Lichtleiter 4 als ein im wesentlichen dreieckig und scheibenförmiges Kunststoffteil ausgebildet sein, dessen Ende 6, das der Leuchtdiode 3 zugewandt ist, derart über der Leuchtdiode 3 positioniert wird, daß zumindest ein Teil des von der Leuchtdiode 3 emittierten Lichtstromes in den Lichtleiter 4 eingekoppelt wird. Dazu überdeckt der Lichtleiter 4 zumindest teilweise die Austrittsstelle 7 des Lichtstromes aus der Leuchtdiode 3. Es ist vorteilhaft, in der Leuchtkammer 1 die räumliche Positionierung des Lichtleiters 4 im Verhältnis zur Leuchtdiode 3 einstellbar und/oder nachführbar auszugestalten, um über den Grad der Überdeckung von Lichtleiter 4 und Leuchtdiode 3 die Intensität des vom Lichtleiter 4 aufgenommenen und fokussierten Lichtstromes zu beeinflussen. Dadurch kann beispielsweise im Nachtbetrieb der Signalleuchte eine Blendwirkung des vom Lichtleiter 4 erzeugten Lichtflecks 5 verhindert werden.

An der dem Betrachter der Signalleuchte zugewandten Seite der Streuscheibe 2 tritt der Lichtleiter 4 mit seinem den gebündelten Lichtstrom enthaltenden Ende punktförmig durch eine Öffnung 8 in der Streuscheibe 2 hindurch, wobei der Lichtleiter 4 nach seinem Durchtritt durch die Streuscheibe 2 in Form eines planen Abschlusses oder in Gestalt einer linsenförmig konkav oder konvex ausgeformten Querschnittsfläche 9 endet. Alternativ zu dieser Ausführungsform kann der Lichtleiter 4 an der dem Betrachter der Signalleuchte abgewandten Seite der Streuscheibe 2 vorzugsweise formschlüssig enden, wenn die Streuscheibe 2 zumindest im Bereich dieses Endes des Lichtleiters 4 transparent ausgebildet ist, so daß für den Betrachter das Ende des Lichtleiters 4 durch die Streuscheibe 2 hindurch als ein Lichtfleck 5 sichtbar wird.

Durch den Einsatz des Lichtleiters 4 wird die Signalwirkung des von der Leuchtdiode 3 hinterleuchteten Symbols 13 insbesondere bei hellem Umgebungslicht erheblich verbessert, weil der Lichtstrom, der durch den Lichtleiter 4 auf einen kleinflächigen Lichtfleck 5 fokussiert ist, in dem durch eine Umrandung angedeuteten Feldbereich 12 des Symbols 13 intensitätsstark hervortritt.

## Patentansprüche

1. Signalleuchte, bestehend aus einer Leuchtkammer (1), einer die Leuchtkammer (1) zum Betrachter der Signalleuchte hin abschließenden Streuscheibe (2) und einer in der Leuchtkammer (1) angeordneten, die Streuscheibe (2) hinterleuchtenden Leuchtdiode (3),
**dadurch gekennzeichnet,**
daß in der Leuchtkammer (1) ein Lichtleiter (4) vorgesehen ist, der zumindest einen Teil des von der Leuchtdiode (3) erzeugten Lichtstromes aufnimmt, bündelt und zur Streuscheibe (2) leitet und diesen Lichtstrom als einen im Verhältnis zur Fläche der Streuscheibe (2) kleinen Lichtfleck (5) durch die Streuscheibe (2) hindurchtreten läßt.

2. Signalleuchte nach Anspruch 1,
**dadurch gekennzeichnet,**
daß dasjenige Ende (6) des Lichtleiters (4), welches der Leuchtdiode (3) zugewandt ist, die Leuchtdiode (3) zumindest an der Austrittsstelle (7) ihres Lichtstromes zur Aufnahme zumindest eines Teiles ihres Lichtstromes zumindest teilweise überdeckt.

3. Signalleuchte nach Anspruch 2,
**dadurch gekennzeichnet,**
daß der Grad der Überdeckung justierbar ist.

4. Signalleuchte nach einem der vorangegangenen Ansprüche,
**dadurch gekennzeichnet,**
daß der Lichtleiter (4) durch eine Öffnung (8) in der Streuscheibe (2) hindurchtritt und nach seinem Durchtritt durch die Streuscheibe (2) an der dem Betrachter der Signalleuchte zugewandten Seite der Streuscheibe in Form einer planen oder konkav oder konvex ausgeformten Querschnittsfläche (9) endet.

5. Signalleuchte nach einem der vorangegangenen Ansprüche,
**dadurch gekennzeichnet,**
daß der Lichtleiter (4) an der dem Betrachter der Signalleuchte abgewandten Seite der Streuscheibe (2) endet und daß die Streuscheibe (2) zumindest im Bereich dieses Endes des Lichtleiters (4) transparent ausgebildet ist.

6. Signalleuchte nach einem der vorangegangenen Ansprüche,
**dadurch gekennzeichnet,**
daß der Lichtleiter (4) aus einem transparenten, farbneutral lichtleitenden Kunststoff besteht.

7. Signalleuchte nach einem der vorangegangenen Ansprüche,
**dadurch gekennzeichnet,**
daß der Lichtleiter (4) aus einem farbigen Kunststoff besteht, wobei dessen Farbe der Farbe des von der Leuchtdiode (3) erzeugten Lichtstromes angepaßt ist.
